# EUROPÄISCHE PATENTANMELDUNG

(11) **EP 1 579 939 A1**
(43) Veröffentlichungstag der Anmeldung: **28.09.2005**
(21) Anmeldenummer: 05101937.0
(22) Anmeldetag: 14.03.2005
(51) Int. Cl.: B23D 47/12, B25F 5/00

(54) **Werkzeuggerät**

(30) Priorität: 25.03.2004 DE 102004015089
(71) Anmelder: HILTI Aktiengesellschaft, 9494 Schaan (LI)
(72) Erfinder: Schittl, Josef, 6712 Thüringen (AT)
(74) Vertreter: Wildi, Roland

(57) **Zusammenfassung**

Ein Werkzeuggerät (1) weist ein Gehäuse (2), eine im Gehäuse (2) von einem Motor (3) angetriebenen Antriebswelle (4), eine mit der Antriebswelle (4) kuppelbare Abtriebswelle (5) für ein Werkzeug (6) und eine Überlastschutzeinrichtung (11) auf. Die Überlastschutzeinrichtung (11) weist ein Planentengetriebe (16) mit einem Sonnenrad, mehreren Planetenrädern, einem Planetenradträger und einem Hohlrad auf. Das Sonnenrad ist von der Antriebswelle (4) und der Planetenradträger von der Abtriebswelle (5) gebildet. Die Überlastschutzeinrichtung (11) weist weiter eine Rutschkupplung (26) auf, welche im eingekuppelten Zustand das Hohlrad drehfest fixiert und im ausgekuppelten Zustand eine Drehbewegung des Hohlrades zulässt.

## Beschreibung

### Technisches Gebiet

Die Erfindung betrifft ein Werkzeuggerät, insbesondere ein elektrisches Sägegerät, mit einem Gehäuse, mit einer im Gehäuse von einem Motor angetriebenen Antriebswelle, mit einer, mit der Antriebswelle kuppelbaren Abtriebswelle für ein Werkzeug und einer Überlastschutzeinrichtung.

### Stand der Technik

Von den gattungsgemässen Werkzeuggeräten, wie beispielsweise Säge-, Schlitz- und Bohrgeräte, angetriebene Werkzeuge können sich im zu bearbeitenden Untergrund verklemmen. Um zu verhindern, dass der Motor Schaden nimmt, werden beispielsweise bei der Werkzeugaufnahme Kupplungen vorgesehen, welche ein Weiterdrehen der Antriebswelle auch im verklemmten Zustand des Werkzeuges ermöglich. Des Weiteren ist bekannt, die Antriebswelle zweiteilig auszubilden und diese beiden Teile mittels einer Kupplungseinrichtung zu verbinden, welche im Fall eines Verklemmens des Werkzeuges das Weiterdrehen der Antriebswelle ermöglicht und somit eine mögliche Beschädigung des Motors verhindert.

Aus der DE 100 38 920 A1 ist eine Kreissäge mit einem Gehäuse bekannt, in welchem eine Rutschkupplung zwischen einer Abtriebswelle und einem Kupplungszahnrad angeordnet ist. Die Antriebswelle vom Motor wirkt exzentrisch auf die das Kupplungszahnrad aufweisende Abtriebswelle. Verklemmt sich das Sägeblatt der Kreissäge wird das Grenzdrehmoment der Rutschkupplung überwunden und das von der Antriebswelle angetriebene Kupplungszahnrad kann weiterdrehen. Nachteilig an der bekannten Lösung ist, dass die Überlastschutzeinrichtung infolge der konstruktiven Ausgestaltung einen verhältnismässig grossen Platzbedarf aufweist.

Aus der DE 101 31 220 C1 ist ein Werkzeug mit einer Überlastschutzeinrichtung bekannt, bei der Rastkörper bei einem Stillstand der Abtriebswelle Blattfedern verbiegen und die Antriebswelle abkuppeln. Nachteilig an dieser Lösung ist, dass diese Überlastschutzeinrichtung aus mehreren aufwändig zu fertigenden Teilen besteht, was zu hohen Fertigungskosten führt. Zudem können die Blattfedern nach einem mehrmaligen Auslösen der Überlastschutzeinrichtung brechen, womit die Gebrauchsdauer derselben beschränkt ist.

### Darstellung der Erfindung

Aufgabe der Erfindung ist es, ein Werkzeuggerät mit einer Überlastschutzeinrichtung zu schaffen, welche zuverlässig in der Anwendung sowie kompakt und einfach im Aufbau ist.

Die Aufgabe ist durch die Merkmale des unabhängigen Anspruchs gelöst. Vorteilhafte Weiterbildungen sind in den Unteransprüchen dargelegt.

Gemäss der Erfindung weist die Überlastschutzeinrichtung ein Planentengetriebe mit einem Sonnenrad, mehreren Planetenrädern, einem Planetenradträger und einem Hohlrad auf. Das Sonnenrad ist von der Antriebswelle und der Planetenradträger von der Abtriebswelle gebildet. Weiter weist die Überlastschutzeinrichtung eine Rutschkupplung auf, welche im eingekuppelten Zustand das Hohlrad drehfest fixiert und im ausgekuppelten Zustand eine Drehbewegung des Hohlrades zulässt.

Die Funktion der Rutschkupplung ist in eine Planetengetriebestufe integriert, womit eine kompakte und deutlich kleinere Bauweise als bei den bekannten Ausführungen der Überlastschutzeinrichtung realisierbar ist. Mit der Verwendung eines herkömmlichen Planetengetriebes lässt sich zudem das Gewicht und die Herstellungskosten für die Überlastschutzeinrichtung reduzieren. Dabei dient das Hohlrad als Rutschkupplungsnabe, welche nur beim Überschreiten eines Grenzdrehmoments dreht. Das Hohlrad ist vorteilhafterweise mittels eines Gleitlagers im Gehäuse des Werkzeuggerätes gelagert. Des Weiteren ist die Überlastschutzeinrichtung weitgehend vor äusseren Einflüssen geschützt, was eine Verlängerung der Serviceintervalle für das Werkzeuggerät ermöglicht.

Die Rutschkupplung umfasst Lamellen z. B. aus Bronze, einen Kupplungsring und Federelemente, welche die Lamelle über den Kupplungsring gegen eine Anschlagsfläche des Hohlrades des Planetengetriebes pressen. Die auf das Hohlrad wirkende Anpresskraft definiert über Reibung das Grenzdrehmoment, bei welchem die Überlastschutzeinrichtung auskuppelt und das Hohlrad sich drehen kann.

Vorzugsweise weist das Hohlrad eine hülsenförmige Erweiterung auf, welche die Abtriebswelle bereichsweise umgibt. Auf der hülsenförmigen Erweiterung ist die Rutschkupplung angeordnet, womit ein Kontakt zwischen Teilen der Rutschkupplung und der Abtriebswelle verhindert wird. Zudem bildet die hülsenförmige Erweiterung eine Führung für die Rutschkupplung, so dass die von der Rutschkupplung erzeugten Kräfte gerichtet auf die Anschlagsfläche des Hohlrades wirken.

Bevorzugt ist an der Aussenkontur des Hohlrades des Planetengetriebes eine von einem Sensor erfassbare Steuerungskurve zur Erfassung einer Drehbewegung des Hohlrades des Planetengetriebes vorgesehen. Da sich das Hohlrad nur bei einer Blockierung der Abtriebswelle dreht, erkennt der Sensor diese Drehbewegung sofort und gibt beispielsweise ein Signal an eine Steuerelektronik weiter. Die Steuerelektronik schaltet entweder den Motor sofort ab oder ändert dessen Drehrichtung, so dass dieser als Bremse für die Antriebswelle wirkt. Mit dieser Ausführungsform wird die in die Rutschkupplung eingebrachte Energie deutlich reduziert und eine Überhitzung der Überlastschutzeinrichtung wird vermieden. Dadurch wird die Gebrauchsdauer des gesamten Werkzeuggerätes derart verlängert, dass die Serviceintervalle auf grössere Zeitabschnitte veranschlagt werden können.

In einer bevorzugten Ausführungsform ist der Sensor ein induktiver Sensor. Die Steuerungskurve weist beispielsweise mehrere, radial zueinander versetzt angeordnete Vertiefungen beziehungsweise Schaltlücken auf. Bei einer Drehbewegung des Hohlrades wird der unterschiedliche Abstand von dem Sensor zu der Steuerungskurve von dem induktiven Sensor erkannt, worauf dieser ein Signal erzeugt. In einer Variante dazu wird ein z. B. ein elektro/mechanischer Sensor verwendet, welcher an der Steuerungskurve des Hohlrades anliegt. Bei einer Drehbewegung des Hohlrades gleitet der Sensor in eine Vertiefung beziehungsweise in eine Schaltlücke und erzeugt dabei ein Signal.

Vorzugsweise ist ein Kupplungsring der Rutschkupplung drehfest am Gehäuse gehalten. Der Kupplungsring weist vorteilhafterweise Ausnehmungen auf, in welche mit dem Gehäuse zusammenwirkende Sicherungsstifte eingreifen. In einer Variante dazu ist der Kupplungsring zumindest bereichsweise mit dem Gehäuse verklebt. Infolge der drehfesten Anordnung des Kupplungsrings wird dieser bei einer Drehbewegung des Hohlrades in seiner Position gehalten und kann sich nicht verschieben beziehungsweise innerhalb der Anordnung verkanten.

Bevorzugt ist das Grenzdrehmoment der Rutschkupplung mittels eines Einstellmittels einstellbar. Das Einstellmittel übt je nach dessen Stellung in Bezug auf das Hohlrad eine grössere oder kleinere Anpresskraft des Kupplungsrings beziehungsweise der Lamelle der Rutschkupplung auf das Hohlrad aus, womit ein grösseres oder kleineres Grenzdrehmoment für eine Drehbewegung des Hohlrades überwunden werden muss. Das Einstellmittel ist beispielsweise eine Mutter mit einem Innengewinde, welches optional mit einem Aussengewinde an der hülsenförmigen Erweiterung des Hohlrades in Eingriff bringbar ist. Alternativ dazu weist das Einstellmittel und optional die hülsenförmige Erweiterung des Hohlrades eine Kulisse auf, entlang welcher das Einstellmittel verschiebbar angeordnet ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: Ein schematisch dargestelltes Werkzeuggerät;
- Fig. 2: einen Längsschnitt durch die Überlastschutzeinrichtung entlang der Linie II-II in Fig. 1; und
- Fig. 3: einen Querschnitt durch die Überlastschutzeinrichtung entlang der Linie III-III in Fig. 2.

Grundsätzlich sind in den Figuren gleiche Teile mit den gleichen Bezugszeichen versehen.

### Wege zur Ausführung der Erfindung

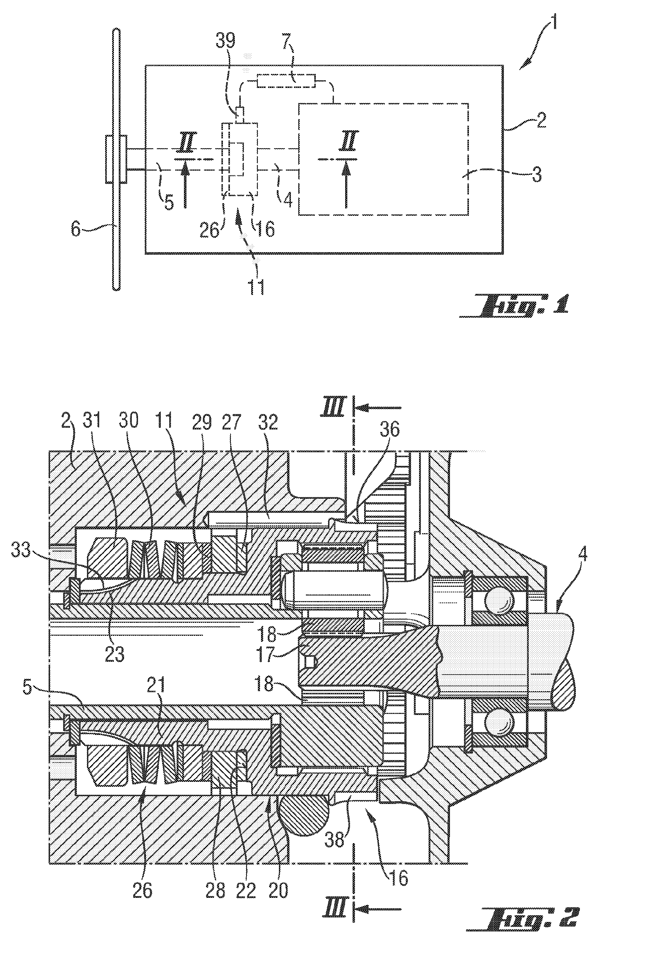

Das in der Fig. 1 gezeigte erfindungsgemässe Werkzeuggerät 1 ist ein Sägegerät mit einem Gehäuse 2, in welchem eine von einem Motor 3 angetriebene Antriebswelle 4 und eine mit der Antriebswelle 4 kuppelbare Abtriebswelle 5 angeordnet ist. An der Abtriebswelle 5 ist das anzutreibende Werkzeug 6 befestigt. Zwischen der Antriebswelle 4 und der Abtriebswelle 5 ist eine Überlastschutzeinrichtung 11 vorgesehen, welche die Kupplung der Antriebswelle 4 mit der Abtriebswelle 5 sicherstellt.

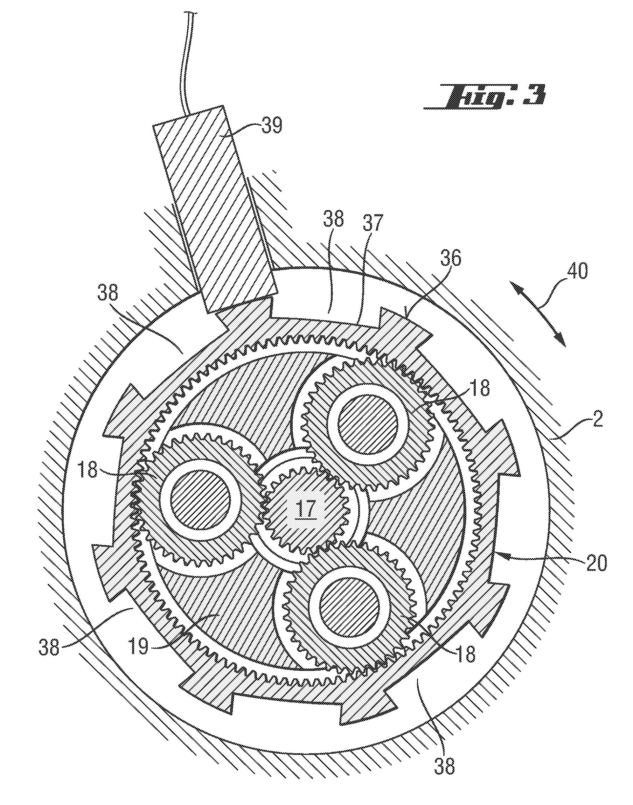

Wie insbesondere aus der Fig. 2 und der Fig. 3 ersichtlich ist, weist die Überlastschutzeinrichtung 11 ein Planetengetriebe 16 mit einem Sonnenrad 17, drei Planetenrädern 18, ein Planetenradträger 19 sowie ein Hohlrad 20 auf. Das Sonnenrad 17 wird von dem freien Ende der Antriebswelle 4 gebildet und kämmt mit den Planetenrädern 18, welche ihrerseits mit dem Hohlrad 20 kämmen. Der Planetenradträger 19 wird von dem, dem Werkzeug 6 abgewandten Ende der Abtriebswelle 5 gebildet. Das Hohlrad 20 weist eine hülsenförmige Erweiterung 21 auf, welche die Abtriebswelle 5 bereichsweise umgibt. An der Aussenseite der hülsenförmigen Erweiterung 21 ist die Rutschkupplung 26 angeordnet. Die Rutschkupplung 26 wirkt auf eine Anschlagsfläche 22 des Hohlrades 20 und hält dieses bis zum Erreichen eines Grenzdrehmomentes gegenüber der Abtriebswelle 5 drehfest.

Die Rutschkupplung 26 weist eine, an der Anschlagsfläche 22 anliegende Lamelle 27 z. B. aus Bronze, einen Kupplungsring 28, eine weitere Lamelle 29, mehrere Federelemente 30 und ein als Mutter ausgebildetes Einstellmittel 31 auf. Der Kupplungsring 28 ist mittels eines Sicherungsstiftes 32 drehfest am Gehäuse 2 gehalten. An dem Einstellmittel 31 ist eine Kulissenführung 33 vorgesehen, welche mit einer weiteren Kulissenführung 23 an der hülsenförmigen Erweiterung 21 des Hohlrades 20 zusammenwirkt. Mittels Verstellen des Einstellmittels 31 wird das auf das Hohlrad 20 wirkende Grenzdrehmoment eingestellt.

Im Normalbetrieb, d. h. bei einem frei drehenden Werkzeug 6, kämmt die Antriebswelle 4 die Planetenräder 18, welche innerhalb des Hohlrades 20 abrollen. Das Hohlrad 20 wird von der Rutschkupplung 26 drehfest gehalten. Die Abtriebswelle 5, welche gleichzeitig den Planetenradträger 19 ausbildet, treibt das Werkzeug 6 an. Die Überlastschutzeinrichtung 11 befindet sich im eingekuppelten Zustand. Bei einem Verklemmen oder Blockieren des Werkzeuges 6 ist die Abtriebswelle 5 ebenfalls blockiert. Die weiterhin von der Antriebswelle 4 in Bewegung gesetzten Planetenräder 18 drehen an Ort und zwingen das Hohlrad 20 zu einer Drehbewegung. Sobald das zuvor an der Rutschkupplung 26 eingestellte Grenzdrehmoment überschritten wird, dreht das Hohlrad 20 durch und die Überlastschutzeinrichtung 11 befindet sich im ausgekuppelten Zustand. Sobald das Werkzeug 6 wieder frei drehen kann, hält die Rutschkupplung 26 das Hohlrad 20 wieder fest und die Überlastschutzeinrichtung 11 befindet sich wieder im eingekuppelten Zustand.

An der radialen Aussenkontur 36 des Hohlrades 20 sind zur Schaffung einer Steuerkurve 37 mehrere Vertiefungen 38 ausgebildet, welche als Schaltlücken für einen induktiven Sensor 39 dienen. Dreht das Hohlrad 20 bei einem Überschreiten des eingestellten Grenzdrehmomentes in eine der Richtungen des Doppelpfeils 40, so wird diese Drehbewegung sofort von dem Sensor 39 erfasst und ein Signal generiert. Dieses Signal wird an eine Steuerelektronik 7 weitergeleitet, welche den Motor 3 sofort abschaltet oder umpolt, so dass dieser als Bremse für die Antriebswelle 4 dient.

## Patentansprüche

1. Werkzeuggerät, insbesondere ein elektrisches Sägegerät, mit einem Gehäuse (2), mit einer im Gehäuse (2) von einem Motor (3) angetriebenen Antriebswelle (4), mit einer mit der Antriebswelle (4) kuppelbaren Abtriebswelle (5) für ein Werkzeug (6) und einer Überlastschutzeinrichtung (11), **dadurch gekennzeichnet, dass** die Überlastschutzeinrichtung (11) ein Planentengetriebe (16) mit einem Sonnenrad (17), mehreren Planetenrädern (18), einem Planetenradträger (19) und einem Hohlrad (20) aufweist, wobei das Sonnenrad (17) von der Antriebswelle (4) und der Planetenradträger (19) von der Abtriebswelle (5) gebildet ist, und die Überlastschutzeinrichtung (11) weiter eine Rutschkupplung (26) aufweist, welche im eingekuppelten Zustand das Hohlrad (20) drehfest fixiert und im ausgekuppelten Zustand eine Drehbewegung des Hohlrades (20) zulässt.

2. Werkzeuggerät nach Anspruch 1, **dadurch gekennzeichnet, dass** das Hohlrad (20) eine hülsenförmige Erweiterung (21) aufweist, welche die Abtriebswelle (5) bereichsweise umgibt.

3. Werkzeuggerät nach Anspruch 1 oder 2, **dadurch gekennzeichnet, dass** an der Aussenkontur (36) des Hohlrades (20) des Planetengetriebes (16) eine von einem Sensor erfassbare Steuerungskurve (37) zur Erfassung einer Drehbewegung des Hohlrades (20) des Planetengetriebes (16) vorgesehen ist.

4. Werkzeuggerät nach Anspruch 3, **dadurch gekennzeichnet, dass** der Sensor ein induktiver Sensor (39) ist.

5. Werkzeuggerät nach einem der Ansprüche 1 bis 4, **dadurch gekennzeichnet, dass** ein Kupplungsring (28) der Rutschkupplung (26) drehfest am Gehäuse (2) gehalten ist.

6. Werkzeuggerät nach einem der Ansprüche 1 bis 5, **dadurch gekennzeichnet, dass** das Grenzdrehmoment der Rutschkupplung (26) mittels eines Einstellmittels (31) einstellbar ist.
